(19) Europäisches Patentamt / European Patent Office / Office européen des brevets

(11) **EP 2 092 305 B1**

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(21) Anmeldenummer: **07819068.3**

(22) Anmeldetag: **17.10.2007**

(51) Int Cl.:
*G01N 21/35* *(2006.01)*

(86) Internationale Anmeldenummer:
**PCT/EP2007/009000**

(87) Internationale Veröffentlichungsnummer:
**WO 2008/046604 (24.04.2008 Gazette 2008/17)**

(54) **ANORDNUNG UND VERFAHREN ZUM DETEKTIEREN EINES AN EINEM KÖRPER ANGEORDNETEN GEGENSTANDS, INSBESONDERE ZUR DURCHFÜHRUNG EINER SICHERHEITSKONTROLLE**

ARRANGEMENT AND METHOD FOR DETECTING AN OBJECT WHICH IS ARRANGED ON A BODY, IN PARTICULAR FOR CARRYING OUT A SECURITY CHECK

SYSTÈME ET PROCÉDÉ DE DÉTECTION D'UN OBJET DISPOSÉ SUR UN CORPS, EN PARTICULIER EN VUE DE L'EXÉCUTION D'UN CONTRÔLE DE SÉCURITÉ

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **18.10.2006 DE 102006049152**

(43) Veröffentlichungstag der Anmeldung:
**26.08.2009 Patentblatt 2009/35**

(73) Patentinhaber: **Ludwig-Maximilians-Universität München**
**80359 München (DE)**

(72) Erfinder: **KERSTING, Roland**
**81925 München (DE)**

(74) Vertreter: **Herzog, Markus et al**
**Weickmann & Weickmann**
**Patentanwälte**
**Postfach 86 08 20**
**81635 München (DE)**

(56) Entgegenhaltungen:
**US-A1- 2005 231 421    US-A1- 2006 214 107**

- **BUERSGENS F ET AL: "Acoustic phase imaging with terahertz radiation" OPTICS EXPRESS, Bd. 15, Nr. 8, 3. April 2007 (2007-04-03), Seiten 4427-4434, XP002465898**
- **BUERSGENS F ET AL: "Millimeter wave probing of the acoustic phase for concealed object detection" OPTICS EXPRESS, Bd. 15, Nr. 14, 2. Juli 2007 (2007-07-02), Seiten 8838-8843, XP002465899**

**EP 2 092 305 B1**

**Beschreibung**

Die Erfindung betrifft eine Anordnung und ein Verfahren zum Detektieren eines an einem Körper angeordneten, möglicherweise aber durch wenigstens ein Deckmaterial verdeckten Gegenstands.

Derartige Anordnungen sind allgemein bekannt. Beispielsweise werden auf Flughäfen oder bei Großveranstaltungen Metalldetektoren zur Sicherheitskontrolle eingesetzt, mit deren Hilfe metallische Waffen aufgespürt werden können. Allerdings versagt diese Methode beispielsweise bei keramischen Messern. Darüber hinaus ist es bekannt, dass mit Hilfe von Massenspektrometern geringste Kontaminationen von Sprengstoff detektiert werden können. Schließlich ist es auch noch bekannt, speziell abgerichtete Hunde zum Aufspüren von Rauschgift einzusetzen. Alle diese Methoden haben den gemeinsamen Nachteil, dass sie nur auf spezifische Stoffklassen ansprechen. Daher wäre eine Vielzahl von Detektoren erforderlich, wenn man sich gegenüber allen möglichen, gefährlichen oder bedenklichen Gegenständen oder Materialien absichern wollte. Insbesondere aus Zeitgründen ist aber die aufeinanderfolgende Anwendung mehrerer solcher Techniken bei der Personenkontrolle nicht praktikabel. Schließlich ist es auch noch bekannt, verborgene Gegenstände mit Hilfe von Röntgenstrahlen aufzuspüren. Diese Methode kann jedoch am menschlichen Körper nicht oder nur in sehr begrenztem Umfang angewandt werden.

Die US 2006/0214107 A und die US 2005/0231421 A offenbaren eine Anordnung zum Detektieren eines an einem Körper angeordneten Gegenstands, insbesondere zur Durchführung einer Sicherheitskontrolle, wobei die Anordnung folgendes umfasst: eine Abstrahleinrichtung, welche in Richtung des Körpers eine kohärente elektromagnetische Detektionsstrahlung abstrahlt, deren Strahlungsfrequenz derart gewählt ist, dass sie von dem Körper und dem zu detektierenden Gegenstand zumindest teilweise reflektiert wird, eine Empfangseinrichtung, welche die von dem Körper und dem Gegenstand reflektierte Strahlung empfängt, und eine Auswerteinrichtung, welche die empfangene Strahlung hinsichtlich Unterschieden in der Reflexionsstärke auswertet.

Es ist daher Aufgabe der Erfindung, eine Anordnung und ein Verfahren der eingangs genannten Art anzugeben, welche unabhängig von spezifischen Stoffklassen in der Lage ist, kontaktlos zu detektieren, ob an einem Körper ein Gegenstand angeordnet ist, und die sich auch zur Anwendung am menschlichen Körper eignet.

Diese Aufgabe wird gemäß eines ersten Gesichtspunkt der Erfindung gelöst durch eine Anordnung zum Detektieren eines an einem Körper angeordneten Gegenstands, die Anordnung umfassend eine Vibrationseinrichtung, welche den Körper in eine mechanische Schwingung vorbestimmter Vibrationsfrequenz und vorbestimmer Vibrationsphase versetzt, eine Abstrahleinrichtung, welche in Richtung des Körpers eine kohärente elektromagnetische Detektionsstrahlung abstrahlt, deren Strahlungsfrequenz derart gewählt ist, dass sie von dem Körper und dem zu detektierenden Gegenstand zumindest teilweise reflektiert wird, eine Empfangseinrichtung, welche die von dem Körper und dem Gegenstand reflektierte Strahlung empfängt, und eine Auswerteinrichtung, welche aus der empfangenen Strahlung die die vorbestimmte Vibrationsfrequenz aufweisenden Anteile herausfiltert und diese hinsichtlich ihrer Vibrationsphasendifferenz zu der vorbestimmten Vibrationsphase auswertet.

Obgleich die Erfindung nachfolgend hauptsächlich am Beispiel der Sicherheitskontrolle von Personen diskutiert und erläutert werden wird, d.h. also in ihrer Anwendung auf einen menschlichen Körper, sei an dieser Stelle darauf hingewiesen, dass die Erfindung hierauf nicht beschränkt ist und ebenso gut auf tierische Körper oder/und nicht lebende Körper oder/und Objekte angewendet werden kann.

Die Erfindung beruht auf der Erkenntnis, dass bei erzwungenen Schwingungen die Phasendifferenz zwischen der Bewegung des in erzwungene Schwingung versetzten Gegenstands relativ zur Erregerschwingung neben der Masse des Gegenstands und seiner Dämpfung unter anderem auch von der Stärke seiner Ankopplung an die Erregerschwingung abhängt.

Versetzt man nun eine Person in erzwungene Schwingung, beispielsweise indem man sie auf eine Vibrationsplatte stellt, so beginnt der Körper der Person, im Beispielsfall ausgehend von den Füßen, zu schwingen. Ob diese erzwungene Schwingung des Körpers dabei dazu führt, dass der gesamte Körper relativ zur vorbestimmten Vibrationsphase der Erregerschwingung mit im Wesentlichen ein und derselben Phasendifferenz schwingt oder die verschiedenen Körperteile mit unterschiedlicher Phasendifferenz schwingen, hängt neben der jeweils gewählten Art der Anregung auch von deren vorbestimmter Vibrationsfrequenz ab. In jedem Fall stellt aber die mechanische Schwingung eines Körperteils, an dem der zu detektierende Gegenstand angeordnet ist, ihrerseits wieder eine Erregerschwingung dar, welche den Gegenstand in eine erzwungene mechanische Schwingung versetzt. Es ist das Verdienst des Erfinders, erkannt zu haben, dass am Körper getragene Gegenstände auf Grund der Phasendifferenz ihrer erzwungenen Schwingung relativ zur Phase der Schwingung der Körperteile, an denen sie angeordnet sind, detektiert werden können. Diesen Effekt macht sich die Erfindung zunutze:

Wählt man die Art der den Körper zu Schwingungen anregenden Vorrichtung und deren Vibrationsfrequenz derart, dass der gesamte Körper relativ zur vorbestimmten Vibrationsphase der Erregerschwingung mit im Wesentlichen ein und derselben Phasendifferenz schwingt, so kann dem die Sicherheitsüberprüfung durchführenden Personal immer dann, wenn in den von der Auswerteeinrichtung herausgefilterten, die vorbestimmte Vibrationsfrequenz aufweisenden Strahlungsanteilen Unteranteile vorhanden sind, deren Phasendifferenz zu der vorbestimmten Vibrationsphase der mechanischen Schwingung in einem vorbestimmten Wertebereich liegt, über ein visuelles, akustisches oder wie auch immer geartetes Signal angezeigt werden, dass die gerade überprüfte Person Gegenstände an ihrem Körper trägt. Infolge dieser Anzeige kann die untersuchte Person dann beispielsweise einer Leibesvisitation unterzogen werden.

In diesem Zusammenhang sei betont, dass die erfindungsgemäße Anordnung auch dann in der Lage ist, den Gegenstand zu detektieren, wenn dieser durch wenigstens ein Deckmaterial verdeckt sein sollte, sofern die Strahlungsfrequenz der Detektionsstrahlung derart gewählt ist, dass sie von dem wenigstens einen Deckmaterial zumindest teilweise transmittiert wird.

Festzuhalten ist, dass die erfindungsgemäße Anordnung die die vorbestimmte Vibrationsfrequenz aufweisenden Anteile der reflektierten Strahlung lediglich hinsichtlich ihrer Phasenlage auswertet, nicht jedoch hinsichtlich deren Amplitude. Es spielt also keine Rolle, welcher Prozentsatz der in Richtung des Körpers abgestrahlten Detektionsstrahlung gegebenenfalls von dem wenigstens einen Deckmaterial absorbiert wird, solange nur das Signal-Rausch-Verhältnis der von den zu detektierenden Gegenständen reflektierten Strahlung eine Detektion dieser Strahlung erlaubt.

Und dies gilt unabhängig davon, um welche Art von Deckmaterial es sich handelt. Bei Sicherheitskontrollen von Personen kann wenigstens ein Deckmaterial ein typisches Bekleidungsmaterial sein, also ein Textilmaterial, beispielsweise ein Naturtextilmaterial, wie Wolle, Baumwolle, Leinen und dergleichen, oder ein Kunsttextilmaterial, wie Polyester, Polyamid, Nylon und dergleichen, ein Naturmaterial, wie Leder und dergleichen, oder ein Gemisch aus zwei oder mehr der vorstehend genannten Materialien.

Anzumerken ist, dass keinerlei Kenntnis über die versteckten Gegenstände oder über deren Eigenschaften, beispielsweise deren mechanische Eigenschaften, erforderlich ist, wodurch vorhergehende Kalibrationsmessungen an potentiell zu detektierenden Gegenständen entfallen.

Im Unterschied zu Radarverfahren wird nicht die Laufzeit eines elektromagnetischen Signals, im vorliegenden Fall der Detektionsstrahlung, von der Abstrahleinrichtung über den Gegenstand bzw. den Körper zur Empfangseinrichtung gemessen. Denn zum einen wird die von solchen Laufzeitmessungen gelieferte Information, nämlich der Abstand des Gegenstands von der Detektionsanordnung, nicht benötigt, da es lediglich um die Erfassung des Vorhandenseins des zu detektierenden Gegenstands geht. Und zum anderen würde die mit dieser Information einhergehende Datenmenge den apparativen Aufwand beträchtlich erhöhen. Zu berücksichtigen ist ferner, dass ein Laufdistanzunterschied von 1 mm eine Zeitauflösung des Laufzeitsignals von etwa 3 ps erfordert, was eine entsprechend schnelle und damit kostenintensive Elektronik erfordern würde. Im Vergleich hiermit ist die Auswertung von Vibrationsphasendifferenzen erheblich kostengünstiger.

Als Detektionsstrahlung eignet sich in besonderem Maße die Terahertz-Strahlung. Diese Strahlung hat zum einen keinerlei gesundheitsschädliche Auswirkungen auf den menschlichen Körper, denn Terahertz-Photonen haben eine äußerst geringe Energie und können daher biologisches Gewebe nicht ionisieren, obgleich Terahertz-Strahlung von Wasser stark absorbiert wird. Zum anderen hat Terahertz-Strahlung die gewünschten Reflexions- bzw. Transmissions-Eigenschaften. So liegt der Transmissionskoeffizient einer Terahertz-Strahlung von zwischen 0,1 THz und 0,5 THz für Textilmaterialien, wie Jeans, Baumwollsocken und Leinenhemden, in der Größenordnung von 90%, und für 2 mm dickes Leder für 0,5 THz in der Größenordnung von 30%, während er für 0,1 THz wiederum etwa 90% beträgt. Außerdem beträgt der Reflexionskoeffizient von Haut in dem fraglichen Frequenzbereich über 10%. Ferner zeichnen sich die meisten Textilien im Thz-Bereich durch eine verschwindend geringe Reflexion aus, wodurch sie auch nur unwesentlich zur Bestimmung der Phasenlage der reflektierten Strahlung beitragen, da diese im Wesentlichen von dem Körper bzw. dem Gegenstand stammt. Zudem besitzt Terahertz-Strahlung dieser Frequenzen eine Wellenlänge, die größer ist als typische Texturgrößen von Textilmaterialien. Daher findet an der Oberfläche von Kleidungsstücken kaum Mie-Streuung statt.

In diesem Zusammenhang ist darauf hinzuweisen, dass man die vorstehend genannten Frequenzen ebenso mit 200 GHz bzw. 500 GHz bezeichnen könnte. Man rechnet sie aber üblicherweise immer noch der "Terahertz-Strahlung" zu, da sie die gleichen Transmissions-, Reflexions- und Absorptions-Eigenschaften aufweist wie diese.

Typische, zur Erzeugung von Terahertz-Strahlung eingesetzte Gunn-Oszillatoren liefern eine Ausgangsleistung von etwa 30 mW. Ferner kann die reflektierte Terahertz-Strahlung bis hinab zu Leistungen von etwa 30 pW aufgelöst werden. Zur Bestrahlung des Körpers kann daher bereits eine Leistung ausreichen, die deutlich unter der für Mobiltelefone zulässigen Höchststrahlungsleistung von etwa 1 W liegt. Dies unterstreicht die Unschädlichkeit der Anwendung der erfindungsgemäßen Anordnung im Rahmen einer Sicherheitskontrolle von Personen.

In diesem Zusammenhang sei erwähnt, dass es auch für mechanische Schwingungen Vorschriften gibt, die zur Vermeidung gesundheitlicher Schäden bei den untersuchten Personen zu beachten sind. Diese sind beispielsweise in der ISO 2631-1 niedergelegt. So beträgt bei einer Vibrationsfrequenz von 100 Hz und einer Vibrationsamplitude von 0,1 mm die maximal zulässige Vibrationsdauer 10 Minuten. Dieser Wert liegt selbstverständlich weit über der für eine Sicherheitsüberprüfung tolerierbaren Zeitdauer. Es wurde gezeigt, dass mittels Terahertz-Techniken Schwingungsamplituden bis hinab zu 200 nm detektierbar sind, was annähernd drei Größenordnungen unter der Schwingungsamplitude von 0,1 mm liegt. Interessant ist ferner, dass als Wahrnehmungsgrenze üblicherweise eine Amplitude von etwa 1 μm und als Schmerzgrenze eine Amplitude von etwa 1 mm angegeben wird.

Im Rahmen der vorliegenden Erfindung können beispielsweise mechanische Schwingungen mit einer Vibrationsfrequenz im Bereich von zwischen etwa 1 Hz und etwa 20.000 Hz, vorzugsweise von zwischen etwa 50 Hz und etwa 200 Hz, noch bevorzugter von etwa 100 Hz, eingesetzt werden. Auch bei diesen Frequenzen kann die jeweils maximal tolerierbare Zeitdauer für die Einwirkung der mechanischen Schwingung bei Weitem unterschritten werden, da mit der erfindungsgemäßen Anordnung Vibrationsamplituden bis hinab zu 500 nm auflösbar sind.

Obgleich der Einsatz einer Vibrationsplatte zur Einleitung der mechanischen Schwingungen in den Körper bevorzugt ist, kann grundsätzlich auch an eine Einkopplung über Lautsprecher oder dergleichen gedacht werden. Die Einkopplung von Schwingungen in den Körper kann auch über eine Sitzfläche oder ganz allgemein über andere Körperteile erfolgen.

Um die Auswertung der reflektierten Strahlung erleichtern zu können, kann die Auswerteeinrichtung eine Überlagerungseinrichtung umfassen, welche die empfangene reflektierte Strahlung mit einer Referenzstrahlung überlagert, die zu der Detektionsstrahlung in einer festen StrahlungsphasenBeziehung steht. Bei dieser Referenzstrahlung kann es sich beispielsweise um einen von der Abstrahleinrichtung der Überlagerungseinrichtung unmittelbar zugeführten Anteil der erzeugten Detektionsstrahlung handeln. Die Überlagerung der reflektierten Strahlung mit der Referenzstrahlung kann als eine Interferenz beschrieben werden, die von der Differenz zwischen dem Laufweg der Referenzstrahlung einerseits und der Summe der Laufwege der zum Körper hin ausgesendeten und der von diesem reflektierten Strahlung andererseits abhängt. Hierzu ist es lediglich erforderlich, dass die Kohärenzlänge der von der Abstrahleinrichtung erzeugten Detektionsstrahlung größer ist als die Summe der Laufwege der zum Körper hin ausgesendeten und der von diesem reflektierten Strahlung.

Die Referenzstrahlung mit ihrer vorbestimmten Strahlungsfrequenz und ihrer vorbestimmten Strahlungsphasenlage wird demnach als Werkzeug zur Abtastung der reflektierten Strahlung benutzt. Selbstverständlich könnten aber auch andere Methoden zur Abtastung der reflektierten Strahlung benutzt werden, ähnlich jenen, wie sie beispielsweise zur Abtastung von Radiowellen aus der Funkfrequenztechnik bekannt sind. Möglich sind auch zeitaufgelöste Verfahren, bei denen die Schwingung des elektromagnetischen Feldes direkt detektiert wird. Auch wenn diese Methoden bislang nur für einen Teil des Terahertz-Spektrums verfügbar sind, ist nicht auszuschließen, dass ähnliche Methoden in den nächsten Jahren auch für höhere Terahertz-Frequenzen entwickelt werden.

Die eigentliche Auswertung bzw. Analyse der reflektierten bzw. überlagerten Strahlung hinsichtlich ihrer Vibrationsphasendifferenz zu der vorbestimmten Vibrationsphase kann mit Hilfe bekannter Techniken erfolgen. Da die zu detektierenden Gegenstände in ihrer räumlichen Lage moduliert werden, können hierzu insbesondere Modulationstechniken eingesetzt werden, die sich durch hohen Kontrast und geringes Rauschen auszeichnen, beispielsweise die Lockin-Technik oder die digitale Datenverarbeitung.

Insbesondere für den Bereich der Sicherheitsüberprüfung von Personen ist es erwünscht, dem Sicherheitspersonal die Auswertung des Untersuchungsergebnisses mit Hilfe einer bildgebenden Technik zu erleichtern. Auch dies kann mit Hilfe von Terahertz-Strahlung realisiert werden, da ihre Wellenlänge kleiner ist als die typische Größe der abzubildenden Gegenstände. Eine Bildgebung kann in einfacher Weise dadurch bereitgestellt werden, dass der Empfangseinrichtung eine ortsauflösende Abbildungsoptik vorgeordnet ist. Dabei bezieht sich der Begriff "Optik" selbstverständlich im vorliegenden Fall nicht auf sichtbare elektromagnetische Strahlung, sondern auf die eingesetzte Terahertz-Strahlung. Die ortsauflösende Abbildungsoptik kann beispielsweise durch sequentielles Scannen in zwei Richtungen verwirklicht werden, beispielsweise der vertikalen und einer horizontalen Richtung, oder aber durch Paralleldetektionsverfahren, bei denen ganze Bildzeilen, ganze Bildspalten oder das gesamte Bild parallel verarbeitet werden. Möglich sind auch Verfahren, die unter dem Schlagwort "synthetic aperture" bekannt geworden sind.

Die Anzeige des Überprüfungsergebnisses kann an einem bildgebenden Gerät erfolgen, beispielsweise einem Bildschirm. Hierzu können mittels Auswertealgorythmen unterschiedlichen Vibrationsphasendifferenzen unterschiedliche Werte zugeordnet werden, und diese Werte können beispielsweise durch unterschiedliche Farbe angezeigt werden. Auch können weitere Messdaten bei der Bildung der Werte berücksichtigt werden. Falls die Erregerschwingung derart gewählt ist, dass im Wesentlichen der gesamte Körper relativ zur vorbestimmten Vibrationsphase der Erregerschwingung mit ein und derselben Phasendifferenz schwingt, so kann die vorbestimmte Vibrationsphase bei der Bildung der Vibrationsphasendifferenzen als Referenzphase verwendet werden. Führt die Erregerschwingung hingegen dazu, dass die verschiedenen Körperteile mit unterschiedlicher Phasendifferenz schwingen, so kann bei der Bestimmung der einem bestimmten Bildbereich zuzuordnenden Vibrationsphasendifferenz die Phasenlage des Signals eines den bestimmten Bildbereich umgebenden oder/und an diesen angrenzenden Bildbereichs als Referenzphase verwendet werden.

Grundsätzlich wäre es möglich, nicht nur die verdeckten Gegenstände auf dem Bildschirm darzustellen, sondern auch die untersuchte Person. Dies würde aber unweigerlich zu einer Darstellung des nackten Körpers der untersuchten Person führen, was aus ethischen Gründen nicht tolerierbar ist. Daher ist es auch im Zusammenhang mit dem Einsatz einer Bildgebungstechnik bevorzugt, einen Ort nur dann als Bildpunkt darzustellen, wenn der Abbildungswert in einem vorbestimmten Wertebereich liegt. Auf diese Weise kann sichergestellt werden, dass nur die zu detektierenden Gegenstände angezeigt werden. Hierdurch erhält das Sicherheitspersonal zusätzliche Informationen über den Gegenstand, und zwar zum einen eine Information über den Ort, wo der Gegenstand an dem Körper getragen wird, und zum anderen aus der Gestalt seines Abbilds eine Information darüber, um welchen Typ von Gegenstand es sich handelt.

Nachzutragen ist noch, dass nicht notwendigerweise mit einer einzigen mechanischen Schwingung vorbestimmter Frequenz und vorbestimmter Phasenlage sowie vorbestimmter Amplitude und vorbestimmter Schwingungsrichtung gearbeitet zu werden braucht. Vielmehr kann ausgenutzt werden, dass nach Fourier jede beliebige Schwingung durch Überlagerung einer Vielzahl von Schwingungen vorbestimmter Frequenz, vorbestimmter Phasenlage, vorbestimmter Amplitude und vorbestimmter Schwingungsrichtung dargestellt werden kann. Daher kann die erfindungsgemäße Signalanalyse für jede dieser Fourier-Komponenten der mechanischen Schwingung getrennt durchgeführt werden.

Das Gleiche gilt auch für die verwendete Detektionsstrahlung: Auch hier kann anstelle eines monofrequenten Signals auch ein Summensignal verwendet werden, das sich als Fourier-Summe von monofrequenten Einzelsignalen darstellen lässt.

Die Erfindung wird im Folgenden an einem Ausführungsbeispiel anhand der beigefügten Zeichnungen näher erläutert werden. Es stellt dar:

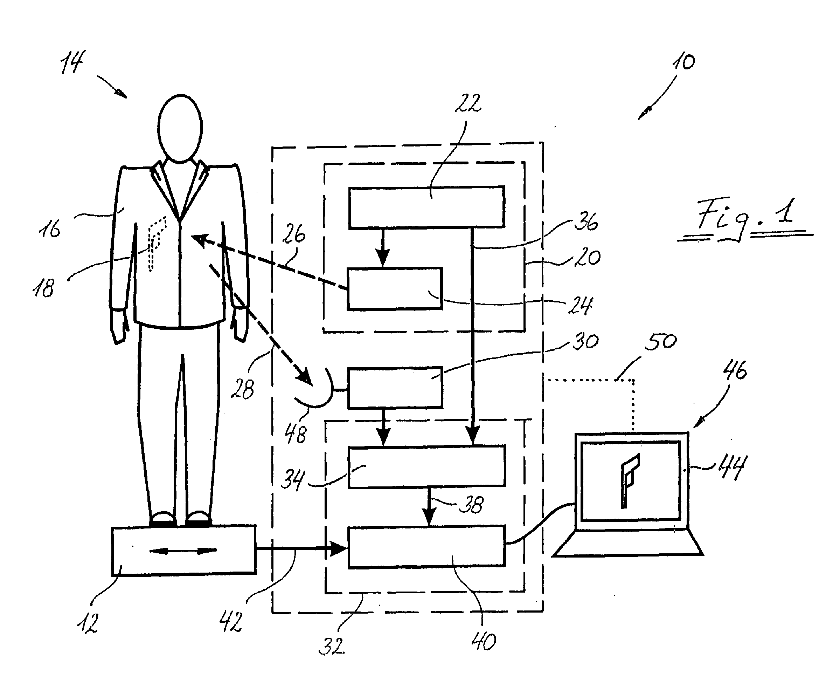

Figur 1     eine schematische Skizze des Aufbaus einer erfindungsgemäßen Anordnung.

In Fig. 1 ist eine erfindungsgemäße Detektionsanordnung allgemein mit 10 bezeichnet. Sie umfasst eine Vibrationsplatte 12, auf der der zu untersuchende Körper, im vorliegenden Fall die zu untersuchende Person 14, angeordnet ist. Die Person 14 trägt unter ihrer Kleidung 16 verdeckt einen Gegenstand 18, im vorliegenden Fall eine Pistole, und es ist Aufgabe der Detektionsanordnung 10, diesen Gegenstand 18 aufzuspüren.

Hierzu wird die Vibrationsplatte 12 mit einer vorbestimmten Frequenz und einer bekannten Phase in Schwingung versetzt, wobei sich diese Schwingung als erzwungene Schwingung auch auf den Körper der Person 14 samt ihrer Kleidung 16 und der verborgen getragenen Pistole 18 überträgt. Die sich ergebende Bewegung der Person 14, der Kleidung 16 und des verborgenen Gegenstands 18 wird mittels Terahertz-Strahlung abgetastet.

Hierzu umfasst die Detektionsanordnung 10 eine Abstrahleinrichtung 20 mit einer Strahlungserzeugungseinrichtung 22 für Terahertz-Strahlung, die beispielsweise einen Gunn-Oszilator beinhalten kann, und einer Sendeeinrichtung 24, welche die Terahertz-Strahlung als Detektionsstrahlung 26 in Richtung auf den Körper der Person 14 abstrahlt.

Die vom Körper 14 reflektierte Strahlung 28 wird von einer Empfangsvorrichtung 30 aufgenommen und einer Auswerteeinrichtung 32 zugeführt. Und zwar wird sie genauer gesagt einer Überlagerungseinrichtung 34 der Auswerteeinrichtung 32 zugeführt, welche die reflektierte Strahlung 28 mit einer Referenzstrahlung 36 überlagert, die zu der Detektionsstrahlung 26 in einer bekannten Strahlungsphasenbeziehung steht. In dem in Figur 1 dargestellten Fall ist die Referenzstrahlung nichts anderes als ein Teil der von der Abstrahleinrichtung 20, genauer gesagt deren Strahlungserzeugungseinrichtung 22, erzeugten Terahertz-Strahlung.

Da die Referenzstrahlung 36 somit die gleiche Strahlungsfrequenz aufweist wie die reflektierte Strahlung 28 und zudem die Koherenzlänge der von der Strahlungserzeugungseinrichtung 22 erzeugten Terahertz-Strahlung größer ist als die Differenz der Laufwege von Detektionsstrahlung 26 und reflektierter Strahlung 28 einerseits und der Referenzstrahlung 36 andererseits, eignet sich die Referenzstrahlung 36 in idealer Weise zur Abtastung der Phasenlage der reflektierten Strahlung. Durch die Überlagerung der reflektierten Strahlung 28 mit der Referenzstrahlung 36 erhält man ein Signal, welches die Laufwegänderung der reflektierten Strahlung 28 in Folge der Schwingung des Körpers der Person 14, deren Kleidung 16 und des verborgen getragenen Gegenstands 18 wiedergibt.

Das überlagerte Signal 38 wird dann einer Analyseeinrichtung 40 der Auswerteeinrichtung 32 zugeleitet, welche aus der überlagerten Strahlung 38 die die vorbestimmte Vibrationsfrequenz der Vibrationseinrichtung 12 aufweisenden Anteile herausfiltert und diese hinsichtlich ihrer Vibrationsphasendifferenz zu der vorbestimmten Vibrationsphase der mechanischen Schwingung der Vibrationseinrichtung 12 analysiert. Die Analyseeinrichtung 40 erhält hierzu von der Vibrationseinrichtung 12 ein Referenzsignal 42, welches Frequenz und Phase der Vibrationseinrichtung 12 wiedergibt.

Die Auswerteeinrichtung 32, genauer gesagt deren Analyseeinrichtung 40, gibt bevorzugt nur dann ein Anzeigesignal an eine Anzeigevorrichtung 44 aus, wenn diese Vibrationsphasendifferenz in einem vorbestimmten Wertebereich liegt, der für die Reaktion von verborgen getragenen Gegenständen 18 auf die Schwingung der Vibrationseinrichtung 12 typisch ist.

Wie in Fig. 1 dargestellt, kann die Anzeigevorrichtung 44 eine bildgebende Anzeigevorrichtung sein, beispielsweise der Bildschirm eines Computers 46. Um auf den Bildschirm 44 eine ortsaufgelöste Anzeige ermöglichen zu können, ist der Empfangseinrichtung 30 eine ortsauflösende Optik 48 vorgeordnet, welche den Körper der Person 14 zweidimensional abscannt. Die Ortsauflösung kann dabei beispielsweise 1 mm$^2$ betragen.

Abschließend sei angemerkt, dass der Computer 46 auch zur Steuerung der Detektieranordnung 10 verwendet werden kann, was in Fig. 1 durch die gepunktete Linie 50 dargestellt ist.

In einem konkreten Fall ergibt sich bei Verwendung von CW-Strahlung (CW - continuous wave - Dauerstrich) eine Möglichkeit, Zugriff auf die akustische Phase zu erhalten. Wird die reflektierte Strahlung im Homodyn-Verfahren mit einem Referenzstrahl gemischt, so hängt die Interferenz von den Wegunterschieden zwischen beiden Strahlen ab. Die Verlängerung der Wegstrecke $(x_2 - x_1)$ durch die akustische Schwingung des Gegenstands führt dann zu einem periodischen Interferenzsignal, welches die akustische Phase $(\omega_{acoust}t + \Phi)$ des Gegenstands wiedergibt. Auf der Zeitskala der akustischen Schwingungen resultiert nach Mittelung über die THz-Periode ein Interferenzsignal, wobei $\Delta = x_{2,0} - x_{1,0}$ der Weglängenunterschied in Ruhelage und A die Amplitude der Schwingung ist:

$$\hat{I}(t) = 2\sqrt{I_1 I_2} \cdot \cos\left(\frac{2\pi}{\lambda_{THz}}[\Delta + 2A\sin(\omega_{acoust}t + \phi)]\right) = const \cdot \cos(a + b(t)) \qquad (1)$$

Mit der Entwicklung des Kosinus in eine Potenzreihe und nachfolgender Beschränkung auf Terme der ersten Harmonischen von $\omega_{acoust}$, also ganz wie es ein Frequenzfilter macht, ergibt sich:

$$\cos(a + b(t))\Big|_{\omega_{acoust}} = \left[-a + \frac{1}{6}a^3 - \frac{1}{90}a^5 \pm \ldots\right] \cdot \sin(\omega_{acoust}t + \phi) \qquad (2)$$

Der letzte Term zeigt, dass die akustische Phase aus der Interferenz unter Verwendung eines Frequenzfilters hervorgeht. Allerdings konvergieren die Amplituden in Anhängigkeit von $\Delta$ gegen einen positiven bzw. gegen einen gleich großen negativen Wert. Festzuhalten ist, dass dieses Messprinzip nur zwei mögliche Resultate erlaubt, und zwar entweder eine akustische Phase von $-\Phi$ oder von $+\Phi$. Wird der Gegenstand nicht direkt zur Schwingung angetrieben, sondern über einen dazwischen liegenden Körper mit der Phase $\psi$, so ergeben sich die beiden möglichen Messwerte zu $\psi \pm \Phi$.

Weicht die akustische Phase $\Phi$ von 90° ab, so ergibt das Messprinzip die möglichen Resultate $\Phi$ oder $\Phi$-$\pi$.

Nachzutragen ist noch, dass das Signal-Rausch-Verhältnis des zur Ermittlung der akustischen Phase von der Auswerteeinrichtung 32 ausgewerteten Signals davon abhängt, mit welcher optischen Phase die von der Abstrahleinrichtung 20 abgestrahlte Detektionsstrahlung auf den Körper 14 auftrifft. Es ist jedoch möglich, das Signal-Rausch-Verhältnis für jeden Bildpunkt auf einen hohen Wert einzustellen bzw. zu optimieren, und zwar durch Änderung der Wellenlänge der von der Abstrahleinrichtung 20 abgestrahlten Detektionsstrahlung oder durch Änderung der Position der Abstrahleinrichtung 20 oder durch eine andere geeignete Maßnahme. Dabei ist zu bedenken, dass bei einer Wellenlänge der Detektionsstrahlung in der Größenordnung von 1 mm und einem Abstand zwischen Abstrahleinrichtung und Körper in der Größenordnung von 1 m bereits eine Wellenlängenänderung in der Größenordnung von 0,1% oder eine Positionsänderung in der Größenordnung von 1 mm ausreicht.

Darüber hinaus ist es möglich, ungewollte Sprünge der akustischen Phase zwischen $\Phi$ oder $\Phi$-$\pi$ durch geeignete Wahl der Wellenlänge der Detektionsstrahlung oder/und des Abstands zwischen Abstrahleinrichtung und Körper zu vermeiden. Hierdurch kann das zur Ermittlung der akustischen Phase von der Auswerteeinrichtung 32 ausgewertete Signal eindeutiger interpretiert und damit einfacher ausgewertet werden.

In Bezug auf die oben genannten Kriterien lässt sich zusammenfassen,

- dass die diskutierte Technik eine Modulationstechnik ist und somit eine gute Sensitivität zu erwarten ist,
- dass die Technik zu einem hinreichend eindeutigen Messsignal führt,
- dass das Kriterium der Vollständigkeit erfüllt ist, da alle Gegenstände mit einer Masse erfasst werden können,
- dass das Verfahren am Menschen auf physiologisch verträgliche Weise durchgeführt werden kann,
- dass das Verfahren ethisch unbedenklich ist in Hinsicht auf die Darstellung des menschlichen Körpers. Auf Grund der Eindeutigkeit der Messwerte ist es ein Leichtes, nur solche Gegenstände darzustellen, die sich in ihrer akustischen Phase vom Hintergrund unterscheiden.

**Patentansprüche**

1.  Anordnung (10) zum Detektieren eines an einem Körper (14) angeordneten Gegenstands (18), insbesondere zur Durchführung einer Sicherheitskontrolle, die Anordnung umfassend:

    - eine Vibrationseinrichtung (12), welche mit vorbestimmter Vibrationsfrequenz und vorbestimmer Vibrationsphase schwingt und den Körper (14) in eine mechanische Schwingung versetzt,
    - eine Abstrahleinrichtung (20), welche in Richtung des Körpers (14) eine kohärente elektromagnetische Detektionsstrahlung (26) abstrahlt, deren Strahlungsfrequenz derart gewählt ist, dass sie von dem Körper (14) und dem zu detektierenden Gegenstand (18) zumindest teilweise reflektiert wird,

- eine Empfangseinrichtung (30), welche die von dem Körper (14) und dem Gegenstand (18) reflektierte Strahlung (28) empfängt, und
- eine Auswerteeinrichtung (32), welche aus der empfangenen Strahlung (28) die die vorbestimmte Vibrationsfrequenz aufweisenden Anteile herausfiltert und diese hinsichtlich ihrer Vibrationsphasendifferenz zu der vorbestimmten Vibrationsphase auswertet.

2. Anordnung nach Anspruch 1,
**dadurch gekennzeichnet, dass** diejenigen herausgefilterten Anteile der reflektierten Strahlung (28) der Weiterverarbeitung zugeführt werden, deren Phasendifferenz zu der Vibrationsphase der mechanischen Schwingung der an den Gegenstand (18) angrenzenden oder/und diesen umgebenden Abschnitte des Körpers (14) in einem vorbestimmten Wertebereich liegt.

3. Anordnung nach Anspruch 1 oder 2,
**dadurch gekennzeichnet, dass** der Gegenstand durch wenigstens ein Deckmaterial (16) verdeckt ist, wobei die Strahlungsfrequenz der Detektionsstrahlung derart gewählt ist, dass sie von dem wenigstens einen Deckmaterial (16) zumindest teilweise transmittiert wird.

4. Anordnung nach einem der Ansprüche 1 bis 3,
**dadurch gekennzeichnet, dass** die Detektionsstrahlung Terahertz-Strahlung ist, vorzugsweise mit einer Frequenz von zwischen etwa 30 GHz und etwa 10 THz, noch bevorzugter mit einer Frequenz von zwischen etwa 0,1 THz und etwa 1,0 THz.

5. Anordnung nach einem der Ansprüche 1 bis 4,
**dadurch gekennzeichnet, dass** die Vibrationseinrichtung (12) eine Vibrationsplatte ist, auf der der Körper (14) steht.

6. Anordnung nach einem der Ansprüche 1 bis 5,
**dadurch gekennzeichnet, dass** die mechanische Schwingung eine Vibrationsfrequenz im Bereich von zwischen etwa 1 Hz und etwa 20.000 Hz, vorzugsweise von zwischen etwa 50 Hz und etwa 200 Hz, noch bevorzugter von etwa 100 Hz, aufweist.

7. Anordnung nach einem der Ansprüche 1 bis 6,
**dadurch gekennzeichnet, dass** die Auswerteeinrichtung (32) eine Überlagerungseinrichtung (34) umfasst, welche die empfangene reflektierte Strahlung (28) mit einer Referenzstrahlung (36) überlagert, die zu der Detektionsstrahlung (26) in einer festen Strahlungsphasenbeziehung steht.

8. Anordnung nach einem der Ansprüche 1 bis 7,
**dadurch gekennzeichnet, dass** der Empfangseinrichtung (30) eine ortsauflösende Abbildungsoptik (48) vorgeordnet ist.

9. Anordnung nach einem der Ansprüche 1 bis 8,
**dadurch gekennzeichnet, dass** der Körper (14) ein menschlicher Körper ist.

10. Anordnung nach einem der Ansprüche 3 bis 9,
**dadurch gekennzeichnet, dass** wenigstens ein Deckmaterial (16) ein typisches Bekleidungsmaterial ist.

11. Anordnung nach einem der Ansprüche 1 bis 10,
**dadurch gekennzeichnet, dass** die Strahlungsfrequenz der von der Abstrahleinrichtung (20) abgestrahlten Detektionsstrahlung oder/und der Abstand der Abstrahleinrichtung (20) vom Körper (14) variierbar ist.

12. Verfahren zum Detektieren eines an einem Körper (14) angeordneten Gegenstands (18), insbesondere zur Durchführung einer Sicherheitskontrolle, beispielsweise unter Verwendung einer Anordnung (10) nach einem der vorstehenden Ansprüche, das Verfahren umfassend die Schritte:

- man lässt auf den Körper (14) eine Anregungsschwingung einwirken, welche mit vorbestimmter Vibrationsfrequenz und vorbestimmer Vibrationsphase schwingt, und versetzt den Körper (14) hierdurch in mechanische Schwingung,
- man bestrahlt den Körper (14) mit einer kohärenten elektromagnetische Detektionsstrahlung (26), deren Strahlungsfrequenz derart gewählt ist, dass sie von dem Körper (14) und dem zu detektierenden Gegenstand (18) zumindest teilweise reflektiert wird,
- man empfängt die von dem Körper (14) und dem Gegenstand (18) reflektierte Strahlung (28), und
- man filtert aus der empfangenen Strahlung (28) die die vorbestimmte Vibrationsfrequenz aufweisenden Anteile heraus und wertet diese hinsichtlich ihrer Vibrationsphasendifferenz zu der vorbestimmten Vibrationsphase aus.

**Claims**

1. Arrangement (10) for detecting an object (18) arranged on a body (14), in particular for carrying out a security check, the arrangement comprising:

   - a vibration device (12), which vibrates with predetermined vibration frequency and predetermined vibration phase and sets the body (14) in a mechanical vibration,
   - an emission device (20), which emits a coherent electromagnetic detection radiation (26) in the direction of the body (14), the radiation frequency of which is selected such that it is reflected at least in part by the body (14) and the object (18) to be detected,
   - a receiver device (30), which receives the radiation (28) reflected by the body (14) and the object (18), and
   - an evaluation device (32), which filters out of the radiation (28) received the portions having the predetermined vibration frequency and evaluates them with respect to their vibration phase difference from the predetermined vibration phase.

2. Arrangement according to claim 1,
   **characterized in that** those portions of the reflected radiation (28) filtered out are fed to further processing, the phase difference of which from the vibration phase of the mechanical vibration of the sections of the body (14) adjacent to or/and surrounding the object (18) lies in a predetermined value range.

3. Arrangement according to claim 1 or 2,
   **characterized in that** the object is concealed by at least one covering material (16), wherein the radiation frequency of the detection radiation is selected such that it is transmitted at least in part by the at least one covering material (16).

4. Arrangement according to one of claims 1 to 3,
   **characterized in that** the detection radiation is terahertz radiation, preferably with a frequency between approx. 30 GHz and approx. 10 THz, even more preferably with a frequency of between approx. 0.1 THz and approx. 1.0 THz.

5. Arrangement according to one of claims 1 to 4,
   **characterized in that** the vibration device (12) is a vibration plate on which the body (14) stands.

6. Arrangement according to one of claims 1 to 5,
   **characterized in that** the mechanical vibration has a vibration frequency in the range of between approx. 1 Hz and approx. 20,000 Hz, preferably between approx. 50 Hz and approx. 200 Hz, even more preferably approx. 100 Hz.

7. Arrangement according to one of claims 1 to 6,
   **characterized in that** the evaluation device (32) comprises a superimposition device (34), which superimposes a reference radiation (36) on the received reflected radiation (28), which reference radiation is in a fixed radiation phase relationship to the detection radiation (26).

8. Arrangement according to one of claims 1 to 7,
   **characterized in that** an imaging optical system (48) with spatial resolution is arranged upstream of the receiver device (30).

9. Arrangement according to one of claims 1 to 8,
   **characterized in that** the body (14) is a human body.

10. Arrangement according to one of claims 3 to 9,
    **characterized in that** at least one covering material (16) is a typical clothing material.

11. Arrangement according to one of claims 1 to 10,

**characterized in that** the radiation frequency of the detection radiation emitted by the emission device (20) or/and the distance of the emission device (20) from the body (14) is variable.

12. Method for detecting an object (18) arranged on a body (14), in particular for carrying out a security check, for example using an arrangement (10) according to one of the preceding claims, the method comprising the steps:

- an exciter vibration is allowed to act on the body (14), which vibration vibrates with predetermined vibration frequency and predetermined vibration phase and sets the body (14) hereby in mechanical vibration,
- the body (14) is irradiated with a coherent electromagnetic detection radiation (26), the radiation frequency of which is selected such that it is reflected at least in part by the body (14) and the object (18) to be detected,
- the radiation (28) reflected by the body (14) and the object (18) is received, and
- the portions having the predetermined vibration frequency are filtered out of the radiation (28) received and these are evaluated with respect to their vibration phase difference from the predetermined vibration phase.

**Revendications**

1. Système (10) de détection d'un objet (18) disposé sur un corps (14), en particulier en vue de l'exécution d'un contrôle de sécurité, le système comportant :

- un dispositif de vibration (12) qui oscille à une fréquence de vibration prédéterminée et une phase de vibration prédéterminée et fait osciller mécaniquement le corps (14),
- un dispositif de rayonnement (20) qui rayonne en direction du corps (14) un rayonnement de détection (26) électromagnétique cohérent, dont la fréquence de rayonnement est choisie de telle sorte qu'elle soit réfléchie au moins en partie par le corps (14) et l'objet (18) à détecter,
- un dispositif de réception (30) qui reçoit le rayonnement (28) réfléchi par le corps (14) et l'objet (18), et
- un dispositif d'évaluation (32) qui filtre dans le rayonnement (28) reçu les parts présentant la fréquence de vibration prédéterminée et évalue celles-ci en ce qui concerne leur différence de phase de vibration par rapport à la phase de vibration prédéterminée.

2. Système selon la revendication 1,
**caractérisé en ce que** les parts filtrées du rayonnement (28) réfléchi sont amenées à un traitement ultérieur, dont la différence de phase par rapport à la phase de vibration de l'oscillation mécanique des parties du corps (14) contigües à l'objet (18) et/ou entourant celui-ci se trouve dans une plage de valeur prédéterminée.

3. Système selon la revendication 1 ou 2,
**caractérisé en ce que** l'objet est recouvert par au moins un matériau de couverture (16), la fréquence de rayonnement du rayonnement de détection étant choisie de telle sorte qu'elle soit transmise au moins en partie par l'au moins un matériau de couverture (16).

4. Système selon l'une quelconque des revendications 1 à 3,
**caractérisé en ce que** le rayonnement de détection est un rayonnement à terahertz, de préférence avec une fréquence comprise entre environ 30 GHz et environ 10 THz, de manière encore préférée avec une fréquence comprise entre environ 0,1 THz et environ 1 THz.

5. Système selon l'une quelconque des revendications 1 à 4,
**caractérisé en ce que** le dispositif de vibration (12) est une plaque vibrante, sur laquelle se trouve le corps (14).

6. Système selon l'une quelconque des revendications 1 à 5,
**caractérisé en ce que** l'oscillation mécanique présente une fréquence de vibration dans la plage comprise entre environ 1 Hz et environ 20 000 Hz, de préférence comprise entre environ 50 Hz et environ 200 Hz, de manière encore préférée d'environ 100 Hz.

7. Système selon l'une quelconque des revendications 1 à 6,
**caractérisé en ce que** le dispositif d'évaluation (32) comporte un dispositif de superposition (34) qui recouvre le rayonnement (28) réfléchi reçu avec un rayonnement de référence (36) qui se trouve dans un rapport de phase de rayonnement solide avec le rayonnement de détection (26).

8. Système selon l'une quelconque des revendications 1 à 7,
**caractérisé en ce qu'**une optique de reproduction (48) à résolution locale est montée en amont du dispositif de réception (30).

9. Système selon l'une quelconque des revendications 1 à 8,
**caractérisé en ce que** le corps (14) est un corps humain.

10. Système selon l'une quelconque des revendications 3 à 9,
**caractérisé en ce qu'**au moins un matériau de couverture (16) est un matériau de revêtement typique.

11. Système selon l'une quelconque des revendications 1 à 10,
**caractérisé en ce que** la fréquence de rayonnement du rayonnement de détection rayonné par le dispositif de rayonnement (20) et/ou la distance entre le dispositif de rayonnement (20) et le corps (14) peut être variée.

12. Procédé de détection d'un objet (18) disposé sur un corps (14), en particulier en vue de l'exécution d'un contrôle de sécurité, par exemple en utilisant un système (10) selon l'une quelconque des revendications précédentes, le procédé comportant les étapes suivantes :

- on laisse agir sur le corps (14) une oscillation d'excitation qui oscille à une fréquence de vibration prédéterminée et une phase de vibration prédéterminée et fait osciller mécaniquement par là-même le corps (14),
- on irradie le corps (14) avec un rayonnement de détection (26) électromagnétique cohérent, dont la fréquence de rayonnement est choisie de telle sorte qu'elle soit réfléchie au moins en partie par le corps (14) et l'objet (18) à détecter,
- on reçoit le rayonnement (28) réfléchi par le corps (14) et l'objet (18), et
- on filtre dans le rayonnement (28) reçu les parts présentant la fréquence de vibration prédéterminée et évalue celles-ci en ce qui concerne leur différence de phase de vibration par rapport à la phase de vibration prédéterminée.

_Fig. 1_

EP 2 092 305 B1

**EP 2 092 305 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20060214107 A
- US 20050231421 A